(19) Europäisches Patentamt
European Patent Office
Office européen des brevets

(11) Veröffentlichungsnummer: **0 099 071**
**B1**

(12) # EUROPÄISCHE PATENTSCHRIFT

(45) Veröffentlichungstag der Patentschrift: **29.06.88**

(51) Int. Cl.⁴: **C 09 B 1/42**, C 07 C 97/24, C 07 C 103/22, C 07 C 102/00

(21) Anmeldenummer: **83106642.8**

(22) Anmeldetag: **07.07.83**

(54) **Verfahren zur Herstellung von monobenzoylierten 1,8-Diaminoanthrachinonen.**

(30) Priorität: **16.07.82 DE 3226618**

(43) Veröffentlichungstag der Anmeldung: **25.01.84 Patentblatt 84/4**

(45) Bekanntmachung des Hinweises auf die Patenterteilung: **29.06.88 Patentblatt 88/26**

(84) Benannte Vertragsstaaten: **CH DE FR GB LI**

(56) Entgegenhaltungen:
**EP-A-0 025 926**
**DE-A-1 593 798**
**US-A-2 965 653**
**US-A-3 651 099**

(73) Patentinhaber: **BAYER AG, Konzernverwaltung RP Patentabteilung, D-5090 Leverkusen 1 Bayerwerk (DE)**

(72) Erfinder: **Richter, Bernd, Dr., Am Katterbach 13, D-5060 Bergisch Gladbach 2 (DE)**
Erfinder: **Neeff, Rütger, Dr., Berta- von- Suttner-Strasse 22, D-5090 Leverkusen 1 (DE)**

**EP 0 099 071 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Herstellung von monobenzoylierten 1,8-Diaminoanthrachinonen (1,8-DAA) durch Reaktion von 1,8-Diaminoanthrachinonen mit Benzoylhalogeniden.

Es ist bekannt, daß man 1,4-, 1,5- und 1,8-DAA mit Benzoylchlorid in Nitrobenzol so umsetzen kann, daß bevorzugt nur eine der reaktionsfähigen Aminogruppen acyliert wird. Bei dieser in der DE-PS-816 703 und der US-PS-1 867 057 angegebenen Reaktion entstehen die monoaroylierten Diaminoanthrachinone jedoch meist mit unbefriedigenden Ausbeuten, da im isolierten Produkt Ausgangsmaterial und dibenzoylierte Aminoanthrachinone als Verunreinigungen vorhanden sind.

Nach der DE-PS-1 061 793 kann die Monoaroylierung von Diaminoanthrachinonen in gesättigten Lactamen (z. B. Pyrrolidon) als Lösungsmittel durchgeführt werden.

In der US-PS-3 651 099 wird die Umsetzung von Diaminoanthrachinonen mit Aroylhalogeniden in Gegenwart von Carbonsäure-N-dialkylamiden als Base beschrieben. Nach der EP-A-0 025 926 gelingt die Herstellung von monoaroylierten 1,4-Diaminoanthrachinonen durch Umsetzung von 1,4-DAA mit Aroylhalogeniden in Gegenwart von tertiären aliphatischen Aminoalkoholen oder quartären Ammoniumverbindungen.

Die Übertragung der zuletzt genannten Verfahrensweise auf die Monoaroylierung von 1,5-Diaminoanthrachinon (1,5-DAA) führt bei der angegebenen Reaktionstemperatur zu keiner nennenswerten Umsetzung. Erst bei hoher Reaktionstemperatur (130-150° C) läuft die Aroylierungsreaktion mit befriedigender Geschwindigkeit ab. Das so erhaltene Produktgemisch weist die gleiche Zusammensetzung auf (60 % Mono-, 35 % Dibenzoylaminoanthrachinon) wie das der nichtkatalysierten Reaktion, so daß der Einsatz von tert. Aminoalkoholen oder quartären Ammoniumverbindungen ohne Einfluß auf die Monoaroylierung von 1,5-DAA bleibt.

Überraschenderweise wurde nun gefunden, daß sich gegebenenfalls substituiertes 1,8-Diaminoanthrachinon nach einem neuen Verfahren mit guten Ergebnissen zu den entsprechenden 1-Amino-8-benzylaminoanthrachinonen umsetzen läßt.

Das neue Verfahren zur Herstellung von gegebenenfalls substituiertem 1-Amino-8-benzoylaminoanthrachinon durch Umsetzung von gegebenenfalls substituiertem 1,8-Diaminoanthrachinon mit einem Benzoylhalogenid in Gegenwart eines organischen Lösungs- oder Verdünnungsmittels, eines säurebindenden mittels und gegebenenfalls von Wasser, ist dadurch gekennzeichnet, daß man in Gegenwart von tertiären aliphatischen Aminoalkoholen und/oder quartären Ammoniumverbindungen arbeitet. Zweckmäßigerweise führt man die Umsetzung bei etwa 0° C bis etwa 100° C durch.

Als tertiäre Aminoalkohole werden vorzugsweise solche der allgemeinen Formel I

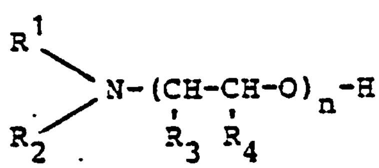 (I)

in der

$R_1$ und $R_2$ gleich oder verschieden sind und für einen gegebenenfalls substituierten Alkylrest oder einen gegebenenfalls substituierten Phenylrest stehen und

$R_3$ und $R_4$ gleich oder verschieden sind und für Wasserstoff, einen gegebenenfalls substituierten Alkylrest oder einen gegebenenfalls substituierten Phenylrest stehen und

n 1, 2 oder 3 bedeutet,

in das erfindungsgemäße Verfahren eingesetzt.

Als gegebenenfalls substituierte Alkylreste kommen für $R_1$ bis $R_4$ bevorzugt solche mit bis zu 4 C-Atomen, besonders bevorzugt bis zu 3 C-Atomen, in Fragen wie Methyl, Ethyl, n-Propyl, iso-Propyl, n-Butyl, iso-Butyl, tert.-Butyl, 2-Hydroxyethyl, 2-Hydroxypropyl, 2-Hydroxybutyl, bevorzugt Methyl, 2-Hydroxyethyl, 2-Hydroxypropyl und Benzyl.

Zum Beispiel seien als tertiäre aliphatische Aminoalkohole genannt:

Dimethylaminoethanol, Methyldiethanolamin, Diethylaminoethanol, Ethyldiethanolamin, Dipropylaminoethanol, Propyldiethanolamin, Dibutylaminoethanol, Butyldiethanolamin, Dimethyl-, Diethyl-, Dipropyl-, Butylaminoisopropanol, Methyl-, Ethyl-, Propyl-, Butyldiisopropanolamin, Dimethyl-, Diethyl-, Dipropyl-, Dibutylaminoisobutanol, Methyl-, Ethyl-, Propyl-, Butyldiisobutanolamin, Triethanolamin-, Triisopropanolamin, Dimethylamino-(hydroxyethyl)-ethylether, bevorzugt Methyldiisopropanolamin, Triisopropanolamin, Butyldiethanolamin, Dimethylamino(hydroxyethyl)-ethylether.

Selbstverständlich ist es auch möglich, die tertiären aliphatischen Aminoalkohole in Form ihrer Salze wie den Hydrochloriden, Sulfaten, Phosphaten oder Acetaten einzusetzen.

Als quartäre Ammoniumverbindungen können solche der allgemeinen Formel II

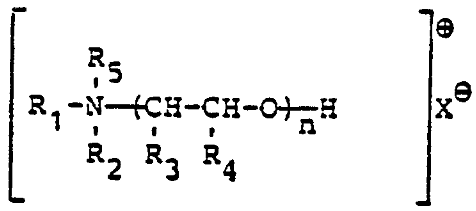

(II)

in der

$R_1$, $R_2$ $R_3$, $R_4$ gleich oder verschieden sind und die unter Formel (I) für $R_1$ bis $R_4$ angegebene Bedeutung haben,

$R_5$ für gegebenenfalls substituiertes Alkyl oder gegebenenfalls substituiertes Phenyl steht,

$X^{\ominus}$ für ein Anion, vorzugsweise für ein Halogenid-, Cyanid-, Hydrogensulfat-, Hydrogenphosphat oder Hydroxylion steht und

n 1, 2 oder 3 bezeichnet,

in das erfindungsgemäße Verfahren eingesetzt werden.

Als Halogenidionen seien genannt: das Fluorid-, Chlorid-, Bromidion, bevorzugt das Choridion.

Zum Beispiel werden als quartäre Ammoniumverbindungen genannt:
Trimethylethanolammoniumhydroxid,
Trimethylisopropanolammoniumhydroxid,
Triethylisopropanolammoniumhydroxid,
Dimethyldiethanolammoniumhydroxid,
Methyltriethanolammoniumhydroxid,
Ethyltriethanolammoniumhydroxid,
Propyltriethanolammoniumhydroxid,
Butyltriethanolammoniumhydroxid,
Trimethylisobutanolammoniumhydroxid.

Bevorzugt seien genannt: Trimethylethanolammoniumhydroxid und Trimethylisopropanolammoniumhydroxid.

Die tertiären Aminoalkohole und/oder quartären Ammoniumverbindungen werden vorzugsweise in Mengen von ca. 0,01 bis ca. 5 Gew.-%, besonders bevorzugt 0,1 bis 1 Gew.-%, bezogen auf 1,8-Diaminoanthrachinon, eingesetzt:

Für den Fall, daß die tertiären Aminoalkohole auch als säurebindende Mittel Verwendung finden, werden vorzugsweise etwa 20 bis etwa 70 Gew.-%, besonders bevorzugt etwa 35 bis etwa 45 Gew.-% eingesetzt.

Dabei können die tertiären aliphatischen Aminoalkohole und/oder quartären Ammoniumverbindungen in Form von festen Substanzen oder als wäßrige Lösungen oder Suspensionen dem Reaktionsgemisch zugesetzt werden.

Als 1,8-Diaminoanthrachinone können solche der allgemeinen Formel III

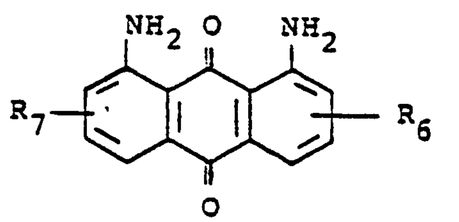

(III)

in der

$R_6$ und $R_7$ gleich oder verschieden sind und für Wasserstoff, Halogen sowie eine Hydroxy-, Nitro-, Acylamino-, Alkyl-, Alkoxy- oder Phenoxygruppe stehen,

in das erfindungsgemäße Verfahren eingesetzt werden.

Als Benzoylhalogenide werden vorzugsweise solche der allgemeinen Formel IV

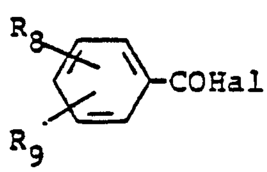

(IV)

in der

Hal für Fluor, Brom, bevorzugt Chlor und

$R_8$, $R_9$ für Wasserstoff, Halogen, Hydroxy, Nitro, Acylamino, Alkyl, Aryl, Alkoxy oder Aryloxy stehen, in das erfindungsgemäße Verfahren eingesetzt.

Halogen ($R_6$, $R_7$, $R_8$, $R_9$) bezeichnet Fluor, Brom und bevorzugt Chlor. Acylamino ($R_6$, $R_7$, $R_8$, $R_9$) bezeichnet bevorzugt Benzoylamino und ($C_1$-$C_6$-Alkyl)-carbonylamino wie Propionylamino, Butyrylamino und besonders bevorzugt Acetylamino.

Alkyl ($R_6$, $R_7$, $R_8$, $R_9$) bezeichnet bevorzugt $C_1$-$C_{10}$-Alkyl wie n-Pentyl, i-Pentyl, n-Octyl, i-Octyl, besonders bevorzugt $C_1$-$C_4$-Alkyl wie Methyl, Ethyl, n-Propyl, i-Propyl, n-Butyl, i-Butyl und t-Butyl.

Aryl ($R_6$, $R_7$, $R_8$, $R_9$) bezeichnet bevorzugt Phenyl oder Naphthyl.

Alkoxy ($R_6$, $R_7$, $R_8$, $R_9$) bezeichnet bevorzugt $C_1$-$C_{10}$-Alkoxy, besonders bevorzugt $C_1$-$C_4$-Alkoxy wie Methoxy, Ethoxy, Propoxy.

Aryloxy ($R_6$, $R_7$, $R_8$, $R_9$) bezeichnet bevorzugt Phenoxy und Methylphenoxy.

Beispielsweise können folgende 1,8-Diaminoanthrachinone in das erfindungsgemäße Verfahren eingesetzt werden:

1,8-Diaminoanthrachinon, 1,8-Diamino-2-methylanthrachinon, 1,8-Diamino-2,7-dimethylanthrachinon, 1,8-Diamino-2,7-diisobutylanthrachinon, 1,8-Diamino-3,6-dibromanthrachinon, 1,8-Diamino-3,6-dichloranthrachinon, 1,8-Diamino-2,4,5,7-tetrabromanthrachinon, 1,8-Diamino-4,5-dinitroanthrachinon, 1,8-Diamino-4,5-diphenoxyanthrachinon, 1,8-Diamino-4,5-dimethoxyanthrachinon.

Bevorzugt eingesetzt wird 1,8-Diaminoanthrachinon.

Folgende Benzoylhalogenide können beispielsweise beim erfindungsgemäßen Verfahren eingesetzt werden: Benzoylchlorid, 2-Chlorbenzoylchlorid, 3-Chlorbenzoylchlorid, 4-Chlorbenzoylchlorid, 2,4-Dichlorbenzoylchlorid, 3,5-Dichlorbenzoylchlorid, 2-Methylbenzoylchlorid, 3-Methylbenzoylchlorid, 4-Methylbenzoylchlorid, 2,4-Dimethylbenzoylchlorid, 3,5-Dimethylbenzoylchlorid, 2-Methoxybenzoylchlorid, 3-Methoxybenzoylchlorid, 4-Methoxybenzoylchlorid, 2,4-Dimethoxybenzoylchlorid, 3,5-Dimethoxybenzoylchlorid, bevorzugt eingesetzt werden Benzoylchlorid, 4-Chlornenzoylchlorid, 4-Methylbenzoylchlorid, 4-Methoxybenzoylchlorid, 2-Chlorbenzoylchlorid und 3-Chlorbenzoylchlorid.

Vorzugsweise werden pro Mol 1,8-DAA etwa 1 bis etwa 1,2 Mol, besonders bevorzugt etwa 1,05 bis etwa 1,15 Mol des Benzoylchlorids eingesetzt.

Als säurebindende Mittel werden bevorzugt Alkali- und Erdalkalimetallcarbonate, Alkali- und Erdalkalimetallhydrogencarbonate, Alkali- und Erdalkalimetalloxide sowie -hydroxide und organische Basen, wobei es sich bei den Alkali- und Erdalkalimetallverbindungen vorzugsweise um Li-, Na-, K-, Mg-, Ca- und Sr-Verbindungen und bei den organischen Basen vorzugsweise um N-haltige Basen handelt, eingesetzt.

Beispielhaft seien genannt: Natriumcarbonat, Kaliumcarbonat, Calciumcarbonat, Natriumhydrogencarbonat, Kaliumhydrogencarbonat, Magnesiumoxid, Calciumoxid, Calciumhydroxid, Pyridin, N,N-Dimethylanilin, N,N-Dimethylbenzylamin. Natriumcarbonat wird vorzugsweise eingesetzt.

Vorzugsweise setzt man etwa 20 bis etwa 70 Gew.-%, besonders bevorzugt etwa 35 bis etwa 45 Gew.-% säurebindendes Mittel, bezogen auf die Menge an 1,8-DAA ein.

Als organische Lösungs- oder Verdünnungsmittel kommen prinzipiell alle in Frage, die unter den Reaktionsbedingungen weitgehend chemisch inert sind. Beispielhaft seien genannt: Nitrobenzol, Chlorbenzol, Xylol, Dichlorbenzole, Sulfone; Nitrobenzol wird vorzugsweise eingesetzt.

Die für das erfindungsgemäße Verfahren günstigen Mengen an organischen Lösungsmitteln können leicht durch Vorversuche ermittelt werden. Vorteilhaft ist es, das Lösungsmittel so zu dosieren, daß ein gut rührbares Gemisch entsteht. Vorzugsweise werden etwa 5 bis etwa 10 Gew.-Teile Lösungs- oder Verdünnungsmittel pro Gewichtsteil 1,8-DAA eingesetzt.

Vorzugsweise wird das erfindungsgemäße Verfahren bei etwa 20 bis etwa 70°C durchgeführt. In einer weiteren vorzugsweisen Ausgestaltung arbeitet man anfangs bei etwa 20 bis etwa 40°C, besonders bevorzugt bei etwa 20 bis etwa 30°C und führt nach Zugabe des Benzoylhalogenids die Reaktion im Bereich von etwa 40 bis etwa 100°C, besonders bevorzugt bei etwa 50 bis etwa 60°C zu Ende.

Man arbeitet im allgemeinen bei Normaldruck. Es ist jedoch auch möglich bei geringem Unterdruck oder Oberdruck zu arbeiten. Zum Beispiel kann man bei einem Unterdruck im Bereich von 0,5 bis 0,7 bar oder bei einem Überdruck im Bereich von 1 bis 3 bar die Umsetzung durchführen.

Die erfindungsgemäße Umsetzung wird vorzugsweise in Gegenwart von Wasser durchgeführt. Dabei werden dem Reaktionsgemisch etwa 1 bis 10 Gew.-% Wasser, bezogen auf 1,8-Diaminoanthrachinon, zugegeben. Bevorzugt werden 3 bis 5 Gew.-% Wasser zugesetzt. Selbstverständlich kann der entsprechende Wassergehalt auch durch Einsatz wasserhaltiger technischer organischer Lösungsmittel oder wasserhaltiger säurebindender Mittel eingestellt werden.

In einer bevorzugten Ausführungsform des erfindungsgemäßen Verfahrens beginnt man die Umsetzung bei etwa 20°C, setzt bei 20-30°C das Benzoylhalogenid zu, heizt in 1-3 h auf 50-60°C und rührt bis zum beendeten Umsatz. Gegebenenfalls gibt man zur Vervollständigung der Reaktion bei dieser Temperatur noch etwas Benzoylhalogenid dem Reaktionsgemisch hinzu. Die Reaktion ist beendet; sobald sich das eingesetzte 1,8-Diaminoanthrachinon nur noch in Spuren chromatographisch nachweisen läßt. Die Reaktion wird durch Zusatz von Wasser abgestoppt, um überschüssiges Benzoylhalogenid zu zersetzen.

Das erfidungsgemäße Verfahren kann sowohl kontinuierlich als auch diskontinuierlich durchgeführt werden.

Die Vorteile des erfidungsgemäßen Verfahrens liegen in der einfachen Durchführung der Reaktion. Es entfallen aufwendige Reinigungs und Trennoperationen und damit die bei der Aufarbeitung der Mutterlaugen entstehenden Abluft- und Abwasserprobleme. Bei dem erfindungsgemäßen Verfahren werden nur geringe

Mengen organische Lösungs- oder Verdünnungsmittel gebraucht, wobei es möglich ist, die abdestillierten organischen Lösungs oder Verdünnungsmittel ohne weitere Reinigung wieder für weitere Umsetzungen zu verwenden.

Weiterhin war es außerordentlich überraschend, daß bei dem erfindungsgemäßen Verfahren durch Zusatz von tertiären aliphatischen Aminoalkoholen und/oder quartären Ammoniumverbindungen die Reaktion so gesteuert werden konnte, daß nur geringe Mengen an unerwünschten Nebenprodukten entstehen, so daß das monobenzoylierte 1,8-DAA ohne weitere Reinigung zur Herstellung von Küpenfarbstoffen verwendet werden kann.

Das erfidungsgemäße Verfahren sei durch die nachfolgenden Beispiele erläutert, ohne es jedoch auf die Beispiele einzuschränken.

**Beispiel 1**

In 1500 ml Nitrobenzol werden 247 g 1,8-Diaminoanthrachinon (96,4 %-ig), 131 g Natriumcarbonat (7 % Wassergehalt) und 2 g Triisopropanolamin (100 %) eingetragen und 30 Minuten bei 20° C gerührt. Innerhalb von 2,5 Stunden werden 128 ml Benzoylchlorid bei 20° C zugetropft.

Nach beendeter Zugabe wird die Reaktionstemperatur in 1,5 Stunden auf 50° C gesteigert und 3 Stunden bei dieser Temperatur gehalten. Die Umsetzung ist beendet, sobald dünnschichtchromatographisch nur noch Spuren des Ausgangsmaterials nachweisbar sind. Nach Zugabe von 5 ml Wasser wird das Nitrobenzol im Vakuum abdestilliert. Man erhält 490 g eines Produktes (87 % der Theorie) mit einem Gehalt von 61 % 1-Amino-8-benzoylaminoanthrachinon, 1,4 % 1,8-Bisbenzoylaminoanthrachinon und 0,3 % 1,8-DAA. Der Rest besteht aus Salzen wie Na-chlorid und Na-benzoat.

Das erhaltene Produkt kann ohne weitere Reinigung zur Herstellung von Küpenfarbstoffen verwendet werden.

Ist ein reineres Produkt erforderlich, so werden 50 g des erhaltenen Rohproduktes in 500 ml $H_2O$ eine Stunde bei 80° C gerührt, abgesaugt, neutralgewaschen und getrocknet.

Man erhält 28,5 g eines Produktes folgender Zusammensetzung: 93 % 1-Amino-8-benzoylaminoanthrachinon, 2,1 % 1,8-Bisbenzoylaminoanthrachinon und und 0,8 % 1,8-DAA.

**Vergleichsbeispiel**

Unter den im Bispiel 1 angegebenen Reaktionsbedingungen werden 135 g 1,8-Diaminoanthrachinon (88,4 %-ig) und 64 ml Benzoylchlorid in 750 ml Nitrobenzol umgesetzt. Im Gegensatz zu Beispiel 1 wurde die Umsetzung aber nicht in Gegenwart von Triisopropanolamin durchgeführt.

Man erhält 160 g eines Produktes, das 7 % 1-Amino-8-benzoylaminoanthrachinon, 42 % 1,8-Bisbenzoylaminoanthrachinon und 32 % 1,8-DAA enthält.

Das Vergleichsbeispiel zeigt, daß ohne Zugabe von Triisopropanolamin nur eine unvollständige Reaktion abläuft, die zudem noch bevorzugt das Bisbenzoylierungsprodukt ergibt.

**Beispiel 2**

In 2500 ml Nitrobenzol werden 247 g 1,8-Diaminoanthrachinon (96,4 %-ig), 157 g Pyridin und 2 g Triisopropanolamin eingetragen und 30 Minuten bei 25° C gerührt. Innerhalb von 2,5 Stunden werden 128 ml Benzoylchlorid bei 25° C zugetropft. Nach beendeter Zugabe wird die Reakionstemperatur in 1,5 Stunden auf 50° C gesteigert und bis zum Ende der Reaktion gehalten. Nach üblicher Aufarbeitung werden 250 g eines Produktes mit einem Gehalt von 93 % 1-Amino-8-benzoylaminoanthrachinon, 2 % 1,8-Bisbenzoylaminoanthrachinon und 2,9 % 1,8-DAA erhalten.

**Beispiele 3-13**

Die Beispiele 3-13 wurden der den in Beispiel 1 angegebenen Reaktionsbedingungen mit 24,7 g Diamioanthrachinon (96,4 %-ig), 13,1 g $Na_2CO_3$ (7 % Waßsergehalt) und 150 ml Nitrobenzol durchgeführt.

| Bsp. | Säurehalogenid | Menge (g) | Triiso-propanol-amin (g) | Aus-beute (g) | Bis-benzoylie-rungs-produkt (%) |
|---|---|---|---|---|---|
| 3 | Benzoylchlorid | 17,2 | 0,4 | 29,6 | 5 |
| 4 | Benzoylchlorid | 17,2 | 0,2 | 30,8 | 5 |
| 5 | Benzoylchlorid | 18,6 | 0,2 | 32,0 | 9 |
| 6 | Benzoylchlorid | 20,1 | 0,2 | 31,9 | 20 |

Setzt man an stelle von Benzoylchlorid die nachfolgend angegebenen Säurehalogenide ein, so werden die entsprechenden 1-Amino-8-aroylamino-anthrachinone in vergleichbaren Ausbeuten und Reinheiten erhalten.

| Bsp. | Säurehalogenid |
|---|---|
| 7 | 2-Chlorbenzoylchlorid |
| 8 | 3-Chlorbenzoylchlorid |
| 9 | 4-Chlorbenzoylchlorid |
| 10 | 2-Methylbenzoylchlorid |
| 11 | 3-Methylbenzoylchlorid |
| 12 | 4-Methylbenzoylchlorid |
| 13 | 4-Methoxybenzoylchlorid |

**Patentansprüche**

1. Verfahren zur Herstellung von gegebenenfalls substituiertem 1-Amino-8-benzoylaminoanthrachinon durch Umsetzung von gegebenenfalls substituiertem 1,8 Diaminoanthrachinon (1,8-DAA) mit einem Benzoylhalogenid in Gegenwart eines organischen Lösungs- oder Verdünnungsmittels, eines säurebindenden Mittels und gegebenenfalls von Wasser, dadurch gekennzeichnet, daß man in Gegenwart von tertiären aliphatischen Aminoalkoholen und/oder quartären Ammoniumverbindungen arbeitet.

2. Verfahren gemäß Anspruch 1, dadurch gekennzeichnet, daß man tertiäre Aminoalkohole der Formel

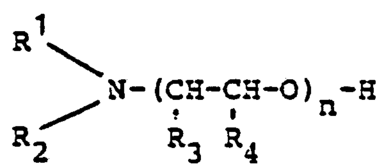

(I)

in der
$R_1$, $R_2$ gegebenenfalls substituiertes Alkyl oder gegebenenfalls substituiertes Phenyl,
$R_3$, $R_4$ Wasserstoff, gegebenenfalls substituiertes Alkyl oder gegebenenfalls substituiertes Phenyl und
n 1, 2 oder 3 bedeuten, einsetzt.

3. Verfahren gemäß den Ansprüchen 1 und 2, dadurch gekennzeichnet, daß man als tertiären Aminoalkohol Methyldiisopropanolamin, Triisopropanolamin, Butyldiethanolamin oder Dimethylamino(hydroxyethyl)-ethylether einsetzt.

4. Verfahren gemäß den Ansprüchen 1.3, dadurch gekennzeichnet, daß man quartäre Ammoniumverbindungen der Formel

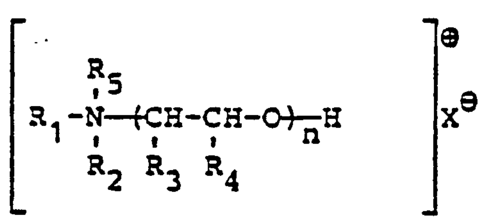

(II)

in der
$R_1$, $R_2$, $R_3$ $R_4$ die zu Formel (I) für $R_1$-$R_4$ angegebenen Bedeutungen haben,
$R_5$ für gegebenenfalls substituiertes Alkyl oder gegebenenfalls substituier tes Phenyl steht,

n 1, 2 oder 3 bezeichnet und
$X^{\ominus}$ für ein Anion, vorzugsweise für ein Halogenid, Cyanid-, Hydrogensulfat-, Hydrogenphosphat oder Hydroxylion steht, einsetzt.

5. Verfahren gemäß den Ansprüchen 1 bis 4, dadurch gekennzeichnet, daß man als quartäre Ammoniumverbindungen Trimethylethanolammoniumhydroxid oder Trimethylisopropanolammoniumhydroxid einsetzt.

6. Verfahren gemäß den Ansprüchen 1 bis 5, dadurch gekennzeichnet, daß man die tertiären Aminoalkohole und/oder quartären Ammoniumverbindungen in Mengen von 0,01 bis 5 Gew.-% bezogen auf 1,8-DAA einsetzt.

7. Verfahren gemäß den Ansprüchen 1 bis 6, dadurch gekennzeichnet, daß man die Umsetzung bei 0 bis 100°C, vorzugsweise bei 20 bis 70°C durchführt.

8. Verfahren gemäß den Ansprüchen 1 bis 7, dadurch gekennzeichnet, daß man die Umsetzung bei 20 bis 40°C, vorzugsweise bei 20 bis 30°C beginnt und nach Zugabe der Benzoylhalogenide bei Temperaturen im Bereich von 40 bis 100°C, bevorzugt 50 bis 60°C, zu Ende führt.

9. Verfahren gemäß den Ansprüchen 1 bis 8 zur Umsetzung von 1,8-Diaminoanthrachinonen der Formel

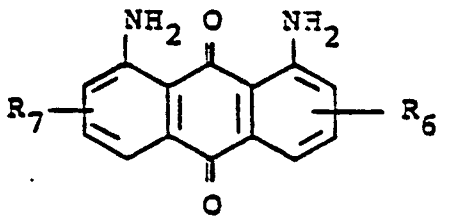

(III)

in der
$R_6$, $R_7$ Wasserstoff, Halogen, Hydroxy, Nitro, Acylamino, Alkyl, Alkoxy oder Phenoxy bezeichnen, mit Benzoyl halogeniden der Formel

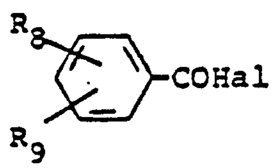

(IV)

in der
Hal für Fluor, Brom, bevorzugt Chlor und
$R_8$, $R_9$ für Wasserstoff, Halogen, Hydroxy, Nitro, Acylamino, Alkyl, Aryl, Alkoxy oder Aryloxy stehen.

10. Verfahren gemäß den Ansprüchen 1 bis 9 zur Umsetzung von 1,8-DAA mit Benzoylchlorid.

**Claims**

1. Process for the preparation of optionally substituted 1-amino-8-benzoylaminoanthraquinone by reaction of optionally substituted 1,8-diaminoanthraquinone (1,8-DAA) with a benzoyl halide in the presence of an organic solvent or diluent, an acid-binding agent and optionally water, characterized in that the reaction is carried out in the presence of tertiary aliphatic aminoalcohols and/or quaternary ammonium compounds.

2. Process according to Claim 1, characterized in that tertiary aminoalcohols of the formula

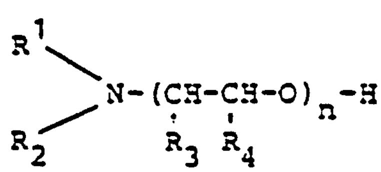

(I)

in which
$R_1$ and $R_2$ denote optionally substituted alkyl or optionally substituted phenyl,
$R_3$ and $R_4$ denote hydrogen, optionally substituted alkyl or optionally substituted phenyl and
n denotes 1, 2 or 3,
are employed.

3. Process according to Claims 1 and 2, characterized in that methyldiisopropanolamine, triisopropanolamine, butyldiethanolamine or dimethylamino-(hydroxyethyl)-ethyl ether is employed as the tertiary aminoalcohol.

4. Process according to Claims 1 - 3, characterized in that quaternary ammonium compounds of the formula

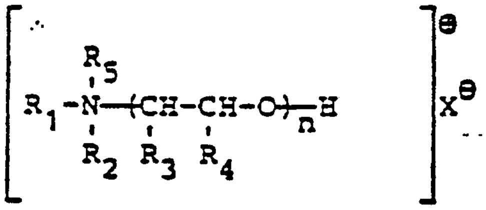

(II)

in which

$R_1$, $R_2$, $R_3$ and $R_4$ have the meanings given in formula (I) for $R_1$-$R_4$,

$R_5$ represents optionally substituted alkyl or optionally substituted phenyl,

n denotes 1, 2 or 3 and

$X^{\ominus}$ represents an anion, preferably a halide, cyanide, hydrogen sulphate, hydrogen phosphate or hydroxyl ion,

are employed.

5. Process according to Claims 1 to 4, characterized in that trimethylethanolammonium hydroxide or trimethylisopropanolammonium hydroxide is employed as quaternary ammonium compounds.

6. Process according to Claims 1 to 5, characterized in thatthe tertiary aminoalcohols and/or quaternary ammonium compounds are employed in amounts from 0.01 to 5 % by weight with respect to 1,8-DAA.

7. Process according to Claims 1 to 6, characterized in that the reaction is carried out at 0 to 100° C, preferably at 20 to 70° C.

8. Process according to Claims 1 to 7, characterized in that the reaction is begun at 20 to 40° C, preferably at 20 to 30° C and, after addition of benzoyl halides is carried out to completion at temperatures in the range from 40 to 100° C, preferably 50 to 60° C.

9. Process according to Claims 1 to 8 for reaction of 1,8-diaminoanthraquinones of the formula

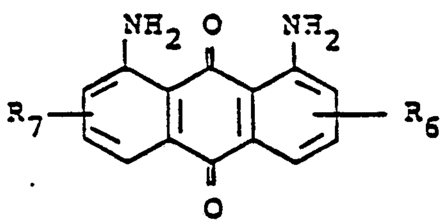

(III)

in which

$R_6$ and $R_7$ denote hydrogen, halogen, hydroxyl, nitro, acylamino, alkyl, alkoxy or phenoxy,

with benzoyl halides of the formula

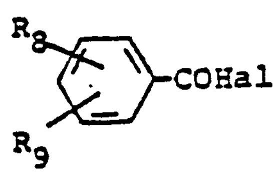

(IV)

in which

Hal represents fluorine, bromine, preferably chlorine and

$R_8$ and $R_9$ represents hydrogen, halogen, hydroxyl, nitro, acylamino, alkyl, aryl, alkoxy or aryloxy.

10. Process according to Claims 1 to 9 for the reaction of 1,8-DAA with benzoyl chloride.

**Revendications**

1. Procédé de production de 1-amino-8-benzoylaminoanthraquinone éventuellement substituée par réaction de 1,8-diaminoanthraquinone (1,8-DAA) éventuellement substituée avec un halogénure de benzoyle en présence d'un solvant ou d'un diluant organique, d'un accepteur d'acide et, le cas échéant, en présence d'eau, caractérisé en ce qu'on opère en présence d'amino-alcools aliphatiques tertiaires et/ou de composés d'ammonium quaternaire.

2. Procédé suivant la revendication 1, caractérisé en ce qu'on utilise des amino-alcools tertiaires de formule

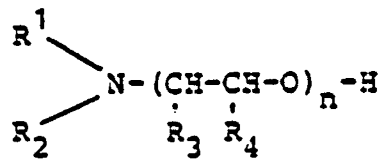

(I)

dans laquelle

$R_1$, $R_2$ représentent un groupe alkyle éventuellement substitué ou un groupe phényle éventuellement substitué,

$R_3$, $R_4$ représentent l'hydrogène, un groupe alkyle éventuellement substitué ou un groupe phényle éventuellement substitué et

n a la valeur 1, 2 ou 3.

3. Procédé suivant les revendications 1 et 2, caractérisé en ce qu'on utilise comme aminoalcool tertiaire la méthyldiisopropanolamine, la triisopropanolamine, la butyldiéthanolamine ou l'éther de diméthylamino-(hydroxyéthyl)-éthyle.

4. Procédé suivant les revendications 1 à 3, caractérisé en ce ou on utilise des composés d'ammonium quaternaire de formule

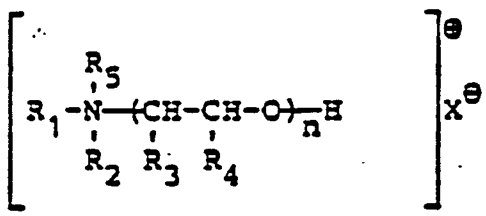

(II)

dans laquelle

$R_1$, $R_2$, $R_3$, $R_4$ ont les définitions indiquées pour $R_1$-$R_4$ à propos de la formule (I),

$R_5$ est un groupe alkyle éventuellement substitué ou un groupe phényle éventuellement substitué,

n a la valeur 1, 2 ou 3 et

$X^{\ominus}$ représente un anion, de préférence un anion halogénure, cyanure, hydrogénosulfate, hydrogénophosphate ou hydroxyle.

5. Procédé suivant les revendications 1 à 4, caractérisé en ce qu'on utilise comme composés d'ammonium quaternaire l'hydroxyde de triméthyléthanolammonium ou l'hydroxyde de triméthylisopropanolammonium.

6. Procédé suivant les revendications 1 à 5, caractérisé en ce qu on utilise les aminoalcools tertiaires et/ou les composés d'ammonium quaternaire en quantités de 0,01 à 5 % en poids par rapport à la 1,8-DAA.

7. Procédé suivant les revendications 1 à 6, caractérisé en ce qu'on conduit la réaction à une température de 0 à 100° C, de préférence à 20-70° C.

8. Procédé suivant les revendications 1 à 7, caractérisé en ce qu'on fait débuter la réaction à une température de 20 à 40° C, de préférence de 20 à 30° C, et on l'achève après addition des halogénures de benzoyle à des températures comprises dans l'intervalle de 40 à 100° C, de préférence de 50 à 60° C.

9. Procédé suivant les revendications 1 à 8 pour la réaction de 1,8-diaminoanthraquinones de formule

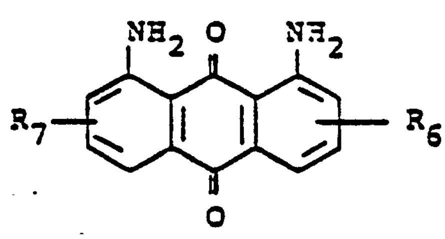

(III)

dans laquelle

$R_6$, $R_7$ représentent l'hydrogène, un halogène, un groupe hydroxy, nitro, acylamino, alkyle, alkoxy ou phénoxy

avec des halogénures de benzoyle de formule

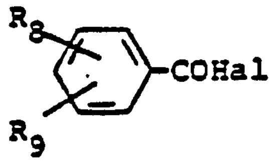

(IV)

dans laquelle

Hal représente le fluor, le brome, de préférence le chlore et

$R_8$, $R_9$ représentent l'hydrogène, un halogène, un groupe hydroxy, nitro, acylamino, alkyle, aryle, alkoxy ou aryloxy.

10. Procédé suivant les revendications 1 à 9 pour la réaction de la 1,8-DAA avec le chlorure de benzoyle.